## Europäisches Patentamt

## European Patent Office

## Office européen des brevets

(11) Veröffentlichungsnummer: **0 052 228**
**B1**

(12) **EUROPÄISCHE PATENTSCHRIFT**

(45) Veröffentlichungstag der Patentschrift:
09.04.86

(51) Int. Cl.⁴: **G 01 N 21/37**

(21) Anmeldenummer: 81108145.4

(22) Anmeldetag: 09.10.81

(54) **Nichtdispersiver Infrarot-Gasanalysator.**

(30) Priorität: 17.11.80 DE 3043332

(43) Veröffentlichungstag der Anmeldung:
26.05.82 Patentblatt 82/21

(45) Bekanntmachung des Hinweises auf die Patenterteilung:
09.04.86 Patentblatt 86/15

(84) Benannte Vertragsstaaten:
DE FR GB NL

(56) Entgegenhaltungen:
DE - A - 2 039 980
DE - B - 1 204 430
US - A - 3 105 147
US - A - 3 653 764
US - A - 3 968 370

(73) Patentinhaber: Siemens Aktiengesellschaft, Berlin und München Wittelsbacherplatz 2, D-8000 München 2 (DE)

(72) Erfinder: Ophoff, Paul-Arthur, Ing.grad., Rheindammstrasse 22, D-6729 Wörth (DE)
Erfinder: Weinel, Johann, Ing.grad., Strassburger Strasse 13, D-7500 Karlsruhe (DE)

## Beschreibung

Die Erfindung bezieht sich auf einen nichtdispersiven Infrarot-(NDIR-)-Gasanalysator mit einer Energieversor-gungseinrichtung zum Betrieb eines Temperaturstrahlers mit Stromimpulsen, mit im Strahlengang der modulierten Infrarot-Strahlung angeordneten, gasgefüllten Kammern und mit einem ein elektrisches Meßsignal abgebenden Meßwertaufnehmer.

Das Wirkungsprinzip und die Betriebsweise von NDIR-Gasanalysatoren darf als bekannt vorausgesetzt werden. Eine den Meßeffekt erhöhende Modulation der Infrarot-Strahlung wird vielfach mit Hilfe eines elektromotorisch angetriebenen Blendenrads vorgenommen, das die Strahlung in den Strahlengängen periodisch unterbricht. Es wird bei dieser Modulationsmethode zwar ein hundertprozentiger Modulationsgrad erreicht, nachteilig ist jedoch der relativ hohe Energiebedarf für den ständig auf Betriebstemperatur gehaltenen Temperaturstrahler und den Antriebsmotor für das Blendenrad, insbesondere bei batteriebetriebenen Feldgeräten. Als weiterer Nachteil bei diesen Geräten, die Erschütterungen ausgesetzt sind und in unterschiedlichen Lagen betrieben werden müssen, ist die Störanfälligkeit der mechanisch bewegten Teile des Strahlunterbrechers anzusehen. Zur Vermeidung des letztgenannten Nachteils sind auch NDIR-Gasanalysatoren bekanntgeworden, bei denen die IR-Strahlungsquelle selbst durch pulsweise Energiezufuhr moduliert wird, siehe z. B. US-A-3 105 147 und DE-B-1 204 430. Um den angestrebten Modulationsgrad von 100 % zu erreichen, lassen sich die bekannten gepulsten Strahler nur mit sehr niedrigen Pulsfrequenzen betreiben, wodurch die Empfindlichkeit des Meßgeräts, insbesondere bei Verwendung selektiver pneumatischer Empfänger, stark vermindert wird.

Bei einem Kolorimeter für lichtdurchlässige Meßmedien mit Glühlampe und fotoelektrischem Empfänger (US-A-3 653 764) ist es ferner bekannt, die Lichtquelle impulsweise zu betreiben, wobei die Ausschaltdauer mindestens gleich der Einschaltdauer sein soll. Zweck dieser Maßnahme ist die Verminderung der Störeinflüsse durch die Wärmebelastung von temperaturempfindlichen Proben und Bauteilen, wie Filter und Halbleiterelementen.

Es besteht deshalb die Aufgabe, einen NDIR-Gasanalysator der eingangs genannten Art, insbesondere als Feldgerät mit netzunabhängiger Stromversorgung, so zu verbessern, daß ein hoher Modulationsgrad bei unverminderter Empfindlichkeit und möglichst geringem Energieverbrauch erreicht wird.

Eine Lösung der Aufgabe wird darin gesehen, daß die Energieversorgungseinrichtung Schaltmittel zur Einstellung eines Puls-/Pausen-Verhältnisses kleiner Eins aufweist, und daß eine Schaltung zur Regelung der Pulsdauer auf solche Werte vorgesehen ist, bei denen der Maximalwert des Meßsignals innerhalb der Pulsdauer auftritt.

Dieser Maximal- oder Spitzenwert läßt sich aus dem Kurvenverlauf der Ansprechkurve des Meßwertaufnehmers empirisch oder rechnerisch ermitteln. Ein einen Leistungsschalter zwischen Stromquelle und Temperaturstrahler steuernder Impulsgeber kann dann entsprechend eingestellt werden. Das Puls-/Pausenverhältnis soll bevorzugt zwischen 0,5 und 0,1 liegen.

Die Pausendauer wird so gewählt, daß der Temperaturstrahler mindestens so weit abkühlt, daß er keine den Meßwert-aufnehmer beeinflussende Strahlung mehr abgibt. Sehr kurze Einschaltzeiten, also Pulslängen, werden erreicht, wenn der Temperaturstrahler mit einem Mehrfachen seiner Dauer-Nennleistung betrieben wird, da dann infolge der erhöhten Strahlungsenergieabgabe der Maximalwert des Meßsignals schneller erreicht wird.

Eine automatische Steuerung der Pulslänge in Abhängigkeit vom Maximalwert des Meßsignals wird mit einem bistabilen Leistungsschalter zwischen Stromquelle und Temperaturstrahler erreicht, der mit Hilfe eines Zeittaktgebers, dessen Taktimpulse einen der Summe aus Puls- und Pausendauer entsprechenden Zeitabstand haben, geschlossen wird und dessen Öffnen ein eingangsseitig von dem Meßsignal beaufschlagter Maximalwert-Detektor bewirkt.

Der durch den Wegfall des elektromotorischen Unterbrecher-Antriebs schon verringerte Energiebedarf des NDIR-Gasanalysators kann durch den gepulsten Betrieb gemäß der Erfindung ohne Einbuße an Meßempfindlichkeit noch weiter vermindert werden.

Zur Erläuterung der Erfindung sind in den Figuren 1 und 2 schaltungsmäßige Ausführungsbeispiele in den Figuren 3 und 4 die zugehörigen Steuerdiagramme dargestellt.

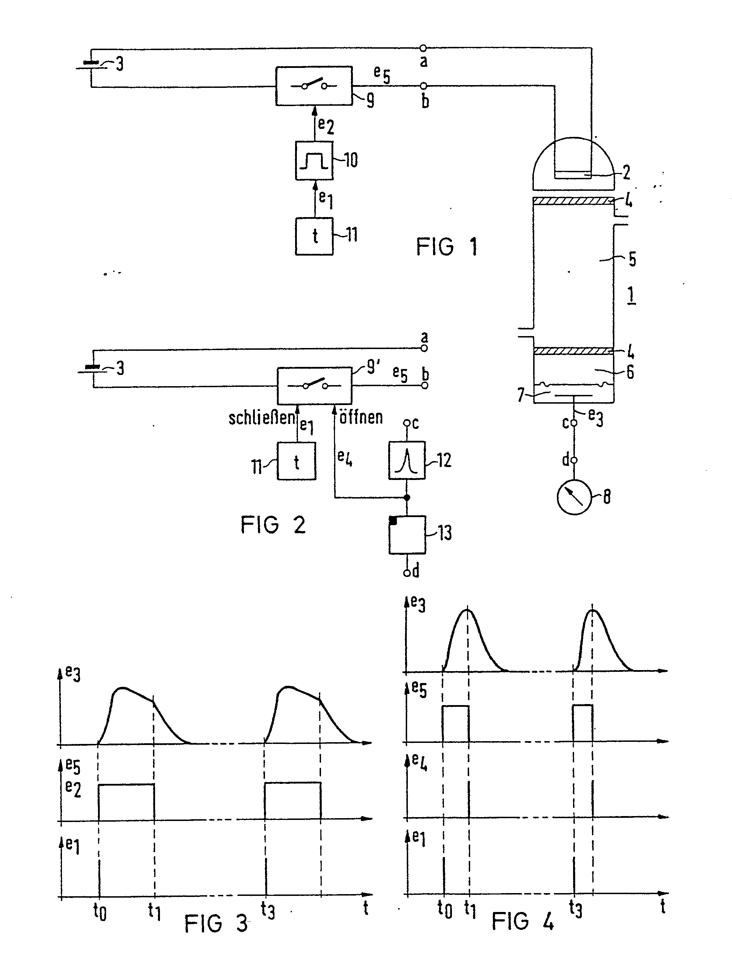

Der in <u>Figur 1</u> dargestellte NDIR-Gasanalysator 1 weist als IR-Strahlungsquelle einen Temperaturstrahler 2 auf, beispielsweise einen gewendelten Widerstandsdraht, der aus einer Stromquelle 3 gespeist wird.

Der von dem Temperaturstrahler 2 ausgehende gebündelte Strahl tritt durch die mit Fenstern 4 versehene und mit dem zu untersuchenden Gasgemisch gefüllte Meßkammer 5 und in die darauffolgende, mit der zu detektierenden Gaskomponente gefüllte Empfängerkammer 6, deren Volumen sich durch die absorbierte Wärmeenergie vergrößert und einen entsprechenden Druck auf den hier als Meßwertaufnehmer 7 angeordneten Membrankondensator ausübt, der ein der Auslenkung seiner beweglichen Membran entsprechendes elektrisches Meßsi-gnal $e_3$ abgibt, welches einer meßwertverarbeitenden und/oder -anzeigenden Einrichtung 8 zugeführt wird. Zur pulsweisen Unterbrechung der Energiezufuhr ist in dem Stromkreis zwischen Temperaturstrahler 2 und Stromquelle 3 ein monostabiler elektronischer Leistungsschalter 9 angeordnet, der von dem Ausgangssignal $e_2$ eines Impulsgebers 10 gesteuert wird.

Dieser wiederum wird von den Taktimpulsen $e_1$ eines Zeittaktgebers 11 getriggert.

In dem Diagramm der Figur 3 sind über der Zeit t der Verlauf der Signale $e_1$, $e_2$, $e_3$ dargestellt.

Zu einem Zeitpunkt $t_0$ wird von einem Taktimpuls $e_1$ des Zeittaktgebers 11 der Impulsgeber 10 angestoßen der einen bis zum Zeitpunkt $t_1$ dauernden Steuerimpuls $e_2$ abgibt. Dieser bewirkt ein Schließen des Leistungsschalters 9 während dieser Zeit.

Dem Temperaturstrahler 2 wird aus der Stromquelle 3 Energie $e_5$ zugeführt am Ausgang c des Meßwertaufnehmers 7 tritt das Meßsignal $e_3$ auf, das schnell seinen Maximalwert erreicht.

Aus der Lage dieses empirisch oder rechnerisch ermittelten Maximalwerts wird vom Zeitpunkt $t_0$ an die Einschaltdauer und damit die Pulslänge $t_1 - t_0$ des vom Impulsgeber 10 abgegebenen Rechteckimpulses $e_2$ berechnet und der Impulsgeber 10 entsprechend eingestellt, und zwar so, daß das Meßsignalmaximum mit Sicherheit innerhalb dieser Zeitspanne erreicht wird.

Nach Ablauf des Rechteckimpulses $e_2$ öffnet der Schalter 9 und unterbricht die Energiezufuhr $e_5$ zum Temperaturstrahler 2 während einer Zeitspanne, die das Mehrfache der Pulsdauer $t_1 - t_0$ beträgt.

•Zum Zeitpunkt $t_3$ gibt der Zeittaktgeber 11 wieder ein Signal $e_1$ ab, und der Vorgang wiederholt sich mit einer Periode, die der Summe $(t_1 - t_0) + (t_3 - t_1)$ von Puls- und Pausendauer entspricht.

Noch kürzere Einschaltzeiten lassen sich mit der automatischen Steuerschaltung nach Figur 2 erreichen, welche mit den Anschlüssen a, b, c, d des NDIR-Gasanalysators 1 verbunden wird.

· Ein bistabiler elektronischer Leistungsschalter 9' ist zwischen dem Temperaturstrahler 2 und der Stromquelle 3 angeordnet. Das Schließen des Leistungsschalters 9' wird von einem Ausgangsimpuls $e_1$ eines Zeittaktgebers 11 bewirkt dessen Taktimpulse einen der Summe aus Puls- und Pausendauer entsprechenden Zeitabstand haben.

Das am Anschluß c des Meßwertaufnehmers 7 auftretende Meß-signal $e_3$ wird einem Maximalwertdetektor 12 zugeführt, der bei Erreichen des Maximalwerts der Ansprechkurve ein Signal $e_4$ entsprechender Höhe abgibt, das in einem Speicher 13 bis zur nächsten Periode zwischengespeichert wird um für die folgende Meßwertverarbeitung ein stetiges Meßsi-gnal zur Verfügung zu haben. Das Ausgangssignal $e_4$ des Maximalwertdetektors 12 dient jedoch auch als ein das Öffnen des Leistungsschalters 9' bewirkendes Steuersignal.

In dem Diagramm der Figur 4 sind die einzelnen Signale in ihrem zeitlichen Zusammenhang dargestellt. Zum Zeitpunkt $t_0$ schließt der Steuerimpuls $e_1$ des Zeittaktgebers 11 den Schalter 9', der Stromkreis Temperaturstrahler - Stromquelle wird geschlossen, der Energiefluß $e_5$

bewirkt die Abgabe von Strahlungsenergie durch den Temperaturstrahler 2 und damit ein Ansteigen des Weßsignals $e_3$ des Meß-wertaufnehmers 7. Sobald dessen Maximum im Zeitpunkt $t_1$ erreicht ist bewirkt das Ausgangssignal $e_4$ des Maximalwertdetektors 12 ein Öffnen des Schalters 9'. Der Energie-fluß $e_5$ wird bis zum Beginn der nächsten Periode im Zeitpunkt $t_3$ unterbrochen.

In der Praxis wurden mit derartig betriebenen NDIR-Gasanalysatoren bei Pulsdauern von 0,1 bis 0,5 sec und Pausendauern bei 0,6 bis 1,5 sec nahezu 100-%ige Modulation erzielt.

Auf diese Art lassen sich alle mit einem modulierten Temperaturstrahler arbeitenden NDIR-Gasanalysatoren in Einstrahl- oder Zweistrahl-Ausführung mit gleichphasiger Modulation und verschiedenen Empfängersystemen mit erheblich vermindertem Energiebedarf betreiben.

**Patentansprüche**

1. Nichtdispersiver Infrarot-Gasanalysator mit einer Energieversorgungseinrichtung zum Betrieb eines Temperaturstrahlers (2) mit Stromimpulsen, mit im Strahlengang der modulierten Infrarot-Strahlung angeordneten, gasgefüllten Kammern (5, 6) und mit einem ein elektrisches Meß-signal abgebenden Meßwertaufnehmer (7), dadurchgekennzeichnet, daß die Energieversorgungseinrichtung Schaltmittel (9, 9') zur Einstellung eines Puls-/Pausen-Verhältnisses < aufweist, und daß eine Schaltung (10, 11; 11, 12) zur Regelung der Pulsdauer auf solche Werte vorgesehen ist, bei denen der Maximalwert des Meßsignals innerhalb der Pulsdauer $(t_1 - t_0)$ auftritt.

2. Nichtdispersiver Infrarot-Gasanalysator nach Anspruch 1, dadurch gekennzeichnet, daß die Schaltmittel (9, 9') der Energieversorgungseinrichtung derart betrieben sind, daß sich ein Puls-/Pausen-Verhältnis in der Größenordnung 0,1 bis 0,5 einstellt.

3. Nichtdispersiver Infrarot-Gasanalysator nach Anspruch 1 oder 2, dadurch gekennzeichnet, daß die dem Temperaturstrahler (2) zugeführte Impulsleistung ein Mehrfaches seiner Dauernennleistung beträgt.

4. Nichtdispersiver Infrarot-Gasanalysator nach einem oder mehreren der Ansprüche 1 bis 3, gekennzeichnet durch

a) einen monostabilen Leistungsschalter (9) zwischen einer Stromquelle (3) und dem Temperaturstrahler (2),

b) einen den Leistungsschalter (9) steuernden Impulsgeber (10) mit einstellbarer Impulslänge,

c) einen Zeittaktgeber (11), dessen Taktimpulse $(e_1)$ einen der Summe von Puls- und Pausendauer $(t_3 - t_0)$ entsprechenden Zeitabstand haben, zur Ansteuerung des Impulsgebers (10).

5. Nichtdispersiver Infrarot-Gasanalysator nach Anspruch 1, gekennzeichnet durch

a) einen bistabilen Leistungsschalter (9') zwischen einer Stromquelle (3) und dem Temperaturstrahler (2),

b) einen das Schließen des Leistungsschalters (9') bewirkenden Zeittaktgeber (11), dessen Taktimpulse einen der Summe aus Puls- und Pausendauer entsprechenden Zeitabstand haben,

c) einen eingangsseitig von dem Meßsignal ($e_3$) beaufschlagten Maximalwertdetektor (12), dessen Ausgangssignal ($e_4$) das Öffnen des Leistungsschalters (9') bewirkt.

## Claims:

1. A non-dispersive infrared gas analyser having an energy supply device for the operation of a temperature radiator (2) with current pulses, having gas-filled chambers (5,6) which are arranped in the path of the modulated infrared radiation, and having a measured value receiver (7) which transmits an electric measuring signal, <u>characterised in that</u> the energy supply device has switching means (9,9') for adjusting a pulse/pause ratio <1, and that a circuit (10,11; 11,12) is provided for controlling the pulse duration to such that the maximal value of the measuring signal occurs within the pulse duration ($t_1$ - $t_0$).

2. A non-dispersive infrared gas analyser as claimed in Claim 1, <u>characterised in that</u> the switching means (9,9') of the energy supply device operate in such a manner that the pulse/pause ratio magnitude is from 0.1 to 0.5.

3. A non-dispersive infrared gas analyser as claimed in Claim 1 or 2, <u>characterised in that</u> the pulse power supplied to the temperature radiator (2) is a multiple of its continuous rating.

4. A non-dispersive infrared gas analyser as claimed in one or more of Claims 1 to 3, <u>characterised by</u>:

a) a monostable circuit breaker (9) between a currentsource (3) and the temperature radiator (2);

b) a pulse generator (10) which has an adjustable pulse length and controls the circuit breaker (9); and

c) a time clock pulse generator (11) whose clock pulses ($e_1$) have a time interval that corresponds to the sum of pulse and pause duration ($t_3$ - $t_0$), for the control of the·pulse generator (10).

5. A non-dispersive infrared gas analyser as claimed in Claim 1, <u>characterised by</u>:

a) a bistable circuit breaker (9') between a currentsource (3) and the temperature radiator (2);

b) a time clock pulse generator (11) which effects the closing of the circuit breaker (9') and whose clock pulses have a time interval that corresponds to the pulse and pause duration; and

c) a maximal value detector (12) supplied with the measuring signal ($e_3$) at the input end, whose output signal ($e_4$) effects the opening of the circuit breaker (9').

## Revendications

1. Analyseur de gaz non dispersif à infrarouge comportant un dispositif d'alimentation en énergie servant à faire fonctionner un radiateur thermique (2) à l'aide d'impulsions de courant, des chambres (5,6) remplies de gaz et disposées sur le trajet du rayonnement infrarouge modulé et un capteur de valeurs de mesure (7) délivrrant un signal électrique de mesure, caractérisé par le fait que le dispositif d'alimentation en énergie comporte des movens de commutation (9,9') servant à régler un rapport impulsion/pause entre impulsions < 1, et qu'il est prévu un circuit (10,11; 11,12) servant à régler la durée des impulsions à des valeurs pour lesquelles la valeur maximum du signal de mesure apparaît à l'intérieur de la durée ($t_1$ - $t_0$) des impulsions.

2. Analyseur de gaz non dispersif à infrarouge suivant la revendication 1, caractérisé par le fait que les moyens de commutation (9,9') du dispositif d'alimentation en énergie sont commandés de telle sorte qu'il s'établit un rapport impulsion/pause entre impulsions d'un ordre de grandeur compris entre 0,1 et 0,5.

3. Analyseur de gaz non dispersif à infrarouge suivant la revendication 2, caractérisé par le fait que la puissance impulsionnelle envoyée au radiateur therique (2) est égale à un multiple de sa puissance nominale en continu.

4. Analyseur de gaz non dispersif à infrarouge suivant une ou plusieurs des revendications 1 à 3, caractérisé par:

a) un interrupteur monostable de puissance (9) situé entre une source de courant (3) et le radiateur thermique (2),

b) un générateur d'impulsions (10) commandant l'interrupteur de puissance (9) et délivrant des impulsions d'une durée réglable,

c) un générateur de cadence (11), dont les impulsions de cadence ($e_1$) sont séparées par un intervalle de temps correspondant à la somme de la durée d'une impulsion et de la durée d'une pause entre impulsions ($t_3$ - $t_0$), pour la commande du générateur d'impulsions (10).

5. Analyseur de gaz non dispersif à infrarouge suivant la revendication 1, caractérisé par:

a) un interrupteur de puissance bistable (9') entre une source de courant (3) et le radiateur thermique (2),

b) un générateur de cadence (11) provoquant la fermeture de l'interrupteur de puissance (9') et dont les impulsions de cadence sont séparées par un intervalle de temps correspondant à la somme de la durée d'une impulsion et de la durée d,une pause entre impulsions,

c) un détecteur de valeur maximum (12) charge sur son entrée par le signal de mesure ($e_3$) et dont le signal de sortie ($e_4$) provoque l'ouverture de l'interrupteur de puissance (9').

FIG 1

FIG 2

FIG 3

FIG 4